# EUROPEAN PATENT APPLICATION

(11) **EP 4 840 752 A1**
(43) Date of publication of application: **18.11.2026**
(21) Application number: 24916973.1
(22) Date of filing: 28.11.2024
(51) Int. Cl.: B63H 9/069, B63B 35/00

(54) **INTERFERENCE PREVENTION DEVICE**

(30) Priority: 09.01.2024 JP 2024001334
(71) Applicant: TOYOTA JIDOSHA KABUSHIKI KAISHA, Toyota-Shi, Aichi-Ken 471-8571 (JP)
(72) Inventor: FUKAGAWA, Tateru, Toyota-shi, Aichi 471-8571 (JP); MASUKI, Hayato, Toyota-shi, Aichi 471-8571 (JP); HIROHATA, Mikikane, Toyota-shi, Aichi 471-8571 (JP); SAITO, Yoshiharu, Toyota-shi, Aichi 471-8571 (JP); OE, Tetsuyuki, Toyota-shi, Aichi 471-8571 (JP)
(74) Representative: J A Kemp LLP
(86) International application number: PCT/JP2024/042241
(87) International publication number: WO 2025/150288

(57) **Abstract**

An interference prevention apparatus includes: a positioning part that defines unwinding/winding positions of a tether for mooring a flying object, in a floating body that constitutes a tether-type wind power generation system; and a guide part that movably holds the positioning part in an outer peripheral region of the floating body, which is located outside a structure on the floating body, when the floating body is viewed in plan.

## Description

### Technical Field

The present invention relates to the technical field of an interference prevention apparatus that prevents interference between a structure on a floating body and a tether, in a tethered wind power generation system that launches a kite from a floating body at sea.

### Background Art

As such a floating body, for example, a ship equipped with a stern winch has been proposed (see Patent Literature 1).

### Citation List

### Patent Literature

Patent Literature 1: JP2018-151113A

### Summary

### Technical Problem

For example, a tether for mooring a kite to a floating body is affected by factors such as changes in wind direction and wind speed at the kite's flight altitude, the kite's flight attitude and flight control status, the floating body's navigation direction and speed, and changes in wind direction and wind speed near the floating body. Consequently, there is such a technical problem that the direction in which the tether extends near the floating body or the amount of slack in the tether may change unexpectedly, potentially causing the interference between the structure on the floating body and the tether.

It is an object of the present invention to provide an interference apparatus configured to prevent the interference between the structure on the floating body and the tether in view of the aforementioned problem.

### Solution to Problem

An interference prevention apparatus according to an aspect of the present invention includes: a positioning part that defines unwinding/winding positions of a tether for mooring a flying object, in a floating body that constitutes a tether-type wind power generation system; and a guide part that movably holds the positioning part in an outer peripheral region of the floating body, which is located outside a structure on the floating body, when the floating body is viewed in plan.

### Brief Description of Drawings

[FIG. 1] FIG. 1(a) and FIG. 1(b) are diagrams illustrating an example of a wind power generation system according to an embodiment.
[FIG. 2] FIG. 2(a) and FIG. 2(b) are diagrams illustrating a modified example of a floating body according to the embodiment.
[FIG. 3] FIG. 3 is a diagram illustrating a first modified example of an interference prevention apparatus according to the embodiment.
[FIG. 4] FIG. 4 is a diagram illustrating a second modified example of the interference prevention apparatus according to the embodiment.

### Description of embodiment

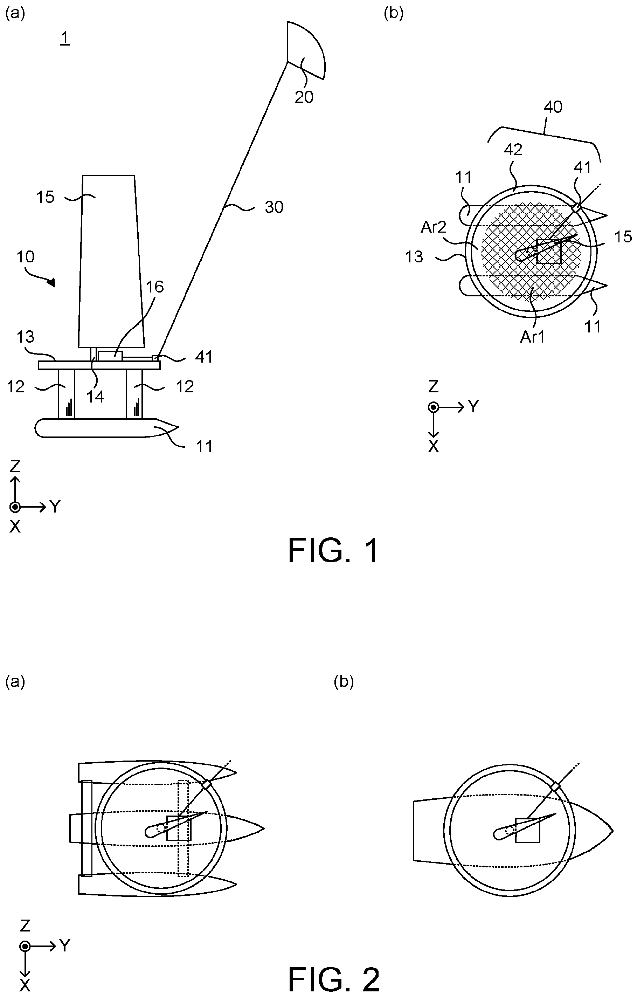

An interference prevention apparatus according to an embodiment will be described with reference to FIG. 1(a) and FIG. 1(b). In FIG. 1(a) and FIG. 1(b), a wind power generation system 1 includes a floating body 10 and a kite 20. The floating body 10 includes a hull 11, legs 12 installed on the hull 11, and a deck 13 supported by the legs 12. The floating body 10 includes a mast 14 installed on the deck 13, and a sail 15 that is attached to the mast 14 and that is configured to rotate about the mast 14. The floating body 10 includes a winch 16, which may also function as a power generation apparatus. The kite 20 is moored to the floating body 10 via a tether 30 wound around the drum of the winch 16.

As illustrated in FIG. 1(b), the floating body 10 may include two hulls 11. In other words, the floating body 10 may include a catamaran. Furthermore, as illustrated in FIG. 2(a), the floating body 10 may include a multihull vessel, or as illustrated in FIG. 2(b), it may include a monohull vessel. Furthermore, the sail 15 may be composed of a flexible sheet or may be composed, at least in part, of a relatively rigid material. In FIG. 1(a) and FIG. 1(b), the winch 16 is positioned on the deck 13. However, the winch 16 may not be limited to being positioned on the deck 13 and may be positioned at any location. For example, the winch 16 may be positioned beneath the deck 13 (i.e., on the side of the deck 13 facing the hull 11) or on top of the hull 11. Furthermore, when viewed in plan, the shape of the deck 13 is not limited to a circle (including an ellipse) but may also be a polygon such as a triangle and a square.

In the wind power generation system 1, when the kite 20 ascends, the tether 30 is reeled out from the winch 16 with the ascent of the kite 20. This unwinding operation of the tether 30 causes the drum of the winch 16 to rotate. Power generation then occurs as a generator rotates in response to the rotation of the drum. Once the tether 30 is reeled out to a predetermined length, or after a predetermined period of time has elapsed, the motor of the winch 16 rotates the drum of the winch 16 in the direction of reeling in the tether 30. As a result, the kite 20 descends due to the winding operation of the tether 30. The wind power generation system 1 generates electricity by repeatedly performing the unwinding and winding operations of the tether 30.

As illustrated in FIG. 1(a) and FIG. 1(b), the mast 14, the sail 15, and the winch 16 are installed on the deck 13 of the floating body 10. For example, at least one of a generator and a mechanism for holding the kite 20 may be installed on the deck 13. In other words, it can be said that a structure used for at least one of navigation of the floating body 10 and wind power generation is installed on the deck 13.

If the tether 30 extends from the winch 16 toward the flying kite 20, there is a possibility that the tether 30 may interfere with the sail 15, for example. Here, the direction in which the tether 30 extends near the floating body 10 and the amount of slack in the tether 30 vary depending on factors such as changes in wind direction and wind speed at the flight altitude of the kite 20, the flight attitude and flight control status of the kite 20, the navigation direction and navigation speed of the floating body 10, and changes in wind direction and wind speed near the floating body 10. For this reason, it is extremely difficult to predict in advance (for example, during the design of the floating body 10) the direction in which the tether 30 extends near the floating body 10 or the amount of slack in the tether 30.

Therefore, the wind power generation system 1 is equipped with an interference prevention apparatus 40. In other words, the floating body 10 is equipped with the interference prevention apparatus 40. The interference prevention apparatus 40 may include a pulley 41 and a guide rail 42. As illustrated in FIG. 1(a), the tether 30 extending from the winch 16 is connected to the kite 20 via the pulley 41. Therefore, it can be said that the tether 30 extends from the pulley 41 toward the flying kite 20. Here, the tether 30 can be regarded as being reeled out from the pulley 41. Similarly, the tether 30 can be regarded as being reeled in on the pulley 41. Therefore, it can be said that the pulley 41 defines the unwinding/winding positions of the tether 30. For this reason, the pulley 41 may be referred to as a positioning part.

The guide rail 42 is provided in an outer peripheral region Ar2 of the floating body 10, which is located outside an interference region Ar1 illustrated in FIG. 1(b) (a hatched part in FIG. 1(b)). In the aspect illustrated in FIG. 1(b), the guide rail 42 is installed along the outer edge of the deck 13. The pulley 41 is configured to be movable along the guide rail 42. In the aspect illustrated in FIG. 1(b), since the guide rail 42 has a track that circles the outer edge of the deck 13, the pulley 41 can move along the guide rail 42 around the outer edge of the deck 13. In other words, the pulley 41 is a movable pulley. Furthermore, the pulley 41 may roll or slide along the guide rail 42.

The interference region Ar1 refers to a region where, if no measures are taken, a structure on the floating body 10 (specifically, on the deck 13) may interfere with the tether 30. For example, the sail 15 rotates about the mast 14 due to the influence of wind near the floating body 10. Thus, there is a structure on the floating body 10 whose position is variable. For this reason, the interference region Ar1 may include not only a region where a structure is actually located, but also a region where a structure whose position may change is likely to be located (in other words, a region where a structure whose position may change is movable). In the aspect illustrated in FIG. 1(b), the interference region Ar1 may include a region where the sail 15 is likely to be located due to its rotation.

In the aspect illustrated in FIG. 1(b), the guide rail 42 is installed along the outer edge of the deck 13. However, the guide rail 42 may be installed at any position within the outer peripheral region Ar2. Furthermore, the guide rail 42 may not have a track that circles the outer edge of the deck 13. In this case, the guide rail 42 may, for example, have a track that runs along a part of the outer edge of the deck 13. In other words, the guide rail 42 may have a track installed on at least a part of the outer peripheral region Ar2. Furthermore, since various existing aspects are applicable to the configuration of the pulley 41 as a movable pulley and to the configuration of the guide rail 42, a detailed description thereof is omitted.

### (Technical Effect)

Depending on the flight state of the kite 20 (i.e., flight altitude, flight attitude, flight control status, state of tension received from the tether 30, etc.), the wind direction and wind speed at high and low altitudes, and the navigation direction and navigation speed of the floating body 10, at least one of the kite 20 and the tether 30 may move in various directions in the vicinity of the structure on the floating body 10, including the sail 15. If no measures are taken, there is a possibility that the structure on the floating body 10 and the tether 30 will interfere with each other.

However, the wind power generation system 1 is equipped with the interference prevention apparatus 40. The pulley 41 of the interference prevention apparatus 40 defines the unwinding/winding positions of the tether 30 in the outer peripheral region Ar2, which is located outside the interference region Ar1 when the floating body 10 is viewed in plan. As a result, the interference between the tether 30 extending toward the flying kite 20 and the structure on the floating body 10 can be prevented.

Furthermore, the pulley 41 is movable along the guide rail 42 of the interference prevention apparatus 40. Therefore, even if the direction in which the tether 30 extends changes due to changes in the flight state of the kite 20, the pulley 41 can move along the guide rail 42 in accordance with the direction in which the tether 30 extends. In other words, even if the relative positional relationship between the floating body 10 and the kite 20 changes, the interference between the tether 30 and the structure on the floating body 10 can be prevented by the pulley 41 moving along the guide rail 42.

It is also conceivable to configure the winch 16 such that it can move along the guide rail 42. However, for example, the drum of the winch 16, that reels in the tether 30 of 100 meters or more, is relatively large and relatively heavy. Consequently, the winch 16, which holds/supports the drum, is also relatively large and relatively heavy. Moving such a winch 16 along the guide rail 42 is impractical from the perspective of safety or stability of the floating body 10, for example. Furthermore, even if the direction in which the tether 30 extends changes due to changes in the flight state of the kite 20, the position of the relatively heavy winch 16 does not change. Therefore, moving the winch 16 along the guide rail 42 requires power to move the winch 16. Consequently, the power generation efficiency of the wind power generation system 1 decreases by an amount equal to energy consumed in moving the winch 16. From this perspective as well, moving the winch 16 along the guide rail 42 is impractical.

### (First Modified Example)

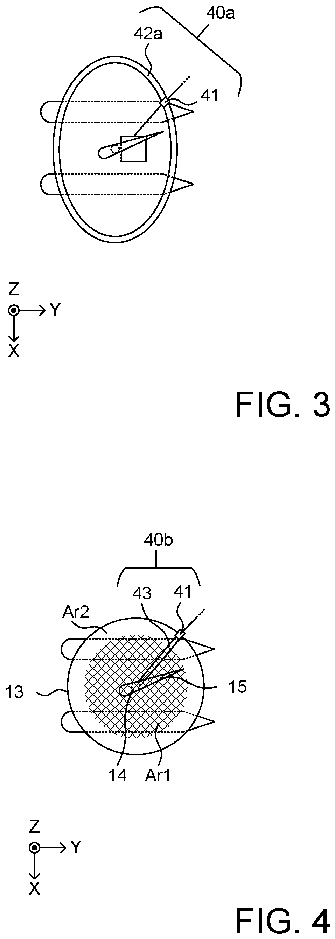

A first modified example of the wind power generation system 1 will be described with reference to FIG. 3. As illustrated in FIG. 3, the wind power generation system 1 according to the first modified example may be provided with an interference prevention apparatus 40a, instead of the interference prevention apparatus 40. In other words, the floating body 10 may be provided with the interference prevention apparatus 40a. The interference prevention apparatus 40a includes the pulley 41 and a guide rail 42a. As illustrated in FIG. 3, the guide rail 42a has an elliptical track. The guide rail 42a having an elliptical path may be installed along the outer edge of the deck 13 of the floating body 10. Furthermore, a part of the guide rail 42a may be provided at a position away from the deck 13 (for example, a part of the guide rail 42a may be provided in the air).

### (Technical Effect)

According to the first modified example, as in the aforementioned embodiment, the interference between the tether 30 extending toward the flying kite 20 and the structure on the floating body 10 can be prevented.

### (Second Modified Example)

A second modified example of the wind power generation system 1 will be described with reference to FIG. 4. As illustrated in FIG. 4, the wind power generation system 1 according to the second modified example may be provided with an interference prevention apparatus 40b, instead of the interference prevention apparatus 40. In other words, the floating body 10 may be provided with the interference prevention apparatus 40b. The interference prevention apparatus 40b includes a guide arm 43, one end of which is movable along the outer peripheral region Ar2, and the pulley 41 that is attached to one end of the guide arm 43, when the floating body 10 is viewed in plan. The guide arm 43 may be configured such that the aforementioned one end is rotatable coaxially with the sail 15 around the outer peripheral region Ar2. In other words, the guide arm 43 may be configured to rotate about the mast 14.

Note that the guide arm 43 may not be rotatable 360 degrees around the mast 14, for example. The guide arm 43 may, for example, be rotatable around a part of the circumference of the mast 14. In other words, the guide arm 43 may be configured such that the end to which the pulley 41 is attached is movable along at least a part of the outer peripheral region Ar2. Note that the pulley 41 may be completely fixed to one end of the guide arm 43. The pulley 41 may be attached to the guide arm 43 such that it is movable slightly in either direction, provided that it remains within the outer peripheral region Ar2.

### (Technical Effect)

The guide arm 43 is configured such that one end thereof (i.e., the end to which the pulley 41 is attached) moves, for example, along the outer edge of the deck 13. Consequently, even if the kite 20 circles above near the sail 15 or performs complex movements including circling, the guide arm 43 to which the pulley 41 is attached rotates in a manner that follows the movements of the kite 20 and the tether 30. As a result, the interference between the tether 30 extending toward the flying kite 20 and the structure on the floating body10 can be prevented.

Example aspects of the invention derived from the embodiment and modified examples described above will be described below.

An interference prevention apparatus according to an aspect of the present invention includes: a positioning part that defines unwinding/winding positions of a tether for mooring a flying object, in a floating body that constitutes a tether-type wind power generation system; and a guide part that movably holds the positioning part in an outer peripheral region of the floating body, which is located outside a structure on the floating body, when the floating body is viewed in plan. In the above embodiment, the "pulley 41" corresponds to an example of the "positioning part," and the "guide rails 42 and 42a" as well as the "guide arm 43" correspond to an example of the "guide part."

In this aspect, the structure may include a sail. The outer peripheral region may be a region of the floating body, which is located outside an outer edge of a region where the sail rotates, when the floating body is viewed in plan.

In the interference prevention apparatus, the guide part may include a guide rail having a track installed on at least a part of the outer peripheral region. The positioning part may include a movable pulley configured to be movable along the guide rail.

Alternatively, in the interference prevention apparatus, the guide part may include a guide arm, one end of which is movable along at least a part of the outer peripheral region, when the floating body is viewed in plan. The positioning part may include a pulley attached to the one end. In this aspect, the structure may include a sail. The one end may be rotatable coaxially with the sail around at least a part of the outer peripheral region, when the floating body is viewed in plan.

The present disclosure is permitted to be changed, if desired, without departing from the essence or spirit of this disclosure which can be read from the claims and the entire specification. An interference prevention apparatus with such changes are also intended to be within the technical scope of the present disclosure.

### Description of Reference Codes

1...Wind power generation system, 10...Floating body, 13...Deck, 14...Mast, 15...Sail, 16...Winch, 20...Kite, 30...Tether, 40, 40a, 40b...Interference prevention apparatus, 41...Pulley, 42, 42a...Guide rail, 43...Guide arm

## Claims

1. An interference prevention apparatus comprising:
a positioning part that defines unwinding/winding positions of a tether for mooring a flying object, in a floating body that constitutes a tether-type wind power generation system; and
a guide part that movably holds the positioning part in an outer peripheral region of the floating body, which is located outside a structure on the floating body, when the floating body is viewed in plan.

2. The interference prevention apparatus according to Claim 1, wherein
the structure includes a sail, and
the outer peripheral region is a region of the floating body, which is located outside an outer edge of a region where the sail rotates, when the floating body is viewed in plan.

3. The interference prevention apparatus according to Claim 1, wherein
the guide part includes a guide rail having a track installed on at least a part of the outer peripheral region, and
the positioning part includes a movable pulley configured to be movable along the guide rail.

4. The interference prevention apparatus according to Claim 1, wherein
the guide part includes a guide arm, one end of which is movable along at least a part of the outer peripheral region, when the floating body is viewed in plan, and
the positioning part includes a pulley attached to the one end.

5. The interference prevention apparatus according to Claim 4, wherein
the structure includes a sail, and
the one end is rotatable coaxially with the sail around at least a part of the outer peripheral region, when the floating body is viewed in plan.
